**Europäisches Patentamt**

**European Patent Office**

**Office européen des brevets**

(19)

(11) Veröffentlichungsnummer : **0 372 251 B1**

(12)

# EUROPÄISCHE PATENTSCHRIFT

(45) Veröffentlichungstag der Patentschrift :
**11.03.92 Patentblatt 92/11**

(51) Int. Cl.$^5$ : **C01B 33/18**

(21) Anmeldenummer : **89120839.9**

(22) Anmeldetag : **10.11.89**

(54) **Verfahren zur Herstellung von Kieselsäuren.**

(30) Priorität : **22.11.88 DE 3839384**

(43) Veröffentlichungstag der Anmeldung :
**13.06.90 Patentblatt 90/24**

(45) Bekanntmachung des Hinweises auf die
Patenterteilung :
**11.03.92 Patentblatt 92/11**

(84) Benannte Vertragsstaaten :
**AT BE DE FR GB IT NL**

(56) Entgegenhaltungen :
**DE-B- 1 014 533**
**FR-A- 854 659**
**JP-A- 53 298**

(56) Entgegenhaltungen :
**CHEMICAL ABSTRACTS, Band 83, 1975, Seite
193, Zusammenfassung Nr. 82194s, Columbus, Ohio, US; & JP-A-75 53 298 (WAKO PURE
CHEMICAL INDUSTRIES, LTD) 12-05-1975**

(73) Patentinhaber : **Degussa Aktiengesellschaft
Weissfrauenstrasse 9
W-6000 Frankfurt am Main 1 (DE)**

(72) Erfinder : **Pauli, Ingo, Dr.
Friedberger Gässchen 2
W-8755 Alzenau (DE)**
Erfinder : **Kleinschmit, Peter, Dr.
Wildaustrasse 19
W-6450 Hanau 9 (DE)**
Erfinder : **Schwarz, Rudolf, Dr.
Taunusstrasse 2
W-8755 Alzenau-Wasserlos (DE)**

EP 0 372 251 B1

## Beschreibung

Die Erfindung betrifft ein Verfahren zur Herstellung von kingelförmiger Kieselsäure bestehend aus Kompakten Kingeln aus Siliciumdioxid mit einer Teilchengröße von 20 bis 100 µm, durch Hydrolyse von Siliciumtetrachlorid mittels Wasser in Gegenwart eines organischen Lösungsmittelsystems.

Es ist bekannt, Fällungskieselsäuren herzustellen, indem man flüssiges Siliciumtetrachlorid in eine wäßrige Flußsäurelösung einrührt (DE-A 35 43 172).

Weiterhin ist es bekannt, Fällungskieselsäuren hoher Reinheit herzustellen, indem man Siliciumtetrachlorid und eine äquivalente Menge an Wasser in einem organischen Lösungsmittel zur Reaktion bringt. Dabei wird stets die Phase, die das Siliciumtetrachlorid enthält, vorgelegt und die wasserhaltige Phase zugegeben. Als organische Lösungsmittel werden Benzol, Eisessig, Aceton eingesetzt (US-PS 2,269,059).

Gegenstand der Erfindung ist ein Verfahren zur Herstellung von Kingelförmiger Kieselsäure, bestehend aus Kompakten Kingeln aus Siliciumdioxid mit einer Teilchengröße von 20 bis 100 µm, druch Hydrolyse von Siliciumtetrachlorid mittels Wasser in Gegenwart eines organischen Lösungsmittelsystems, welches dadurch gekennzeichnet ist, daß man entweder das Siliciumtetrachlorid oder das Wasser vorlegt und den jeweils anderen Reaktionspartner zutropft, wobei man entweder das Siliciumtetrachlorid oder das Wasser in reiner Form zutropft, während der jeweils andere Reaktionspartner im Gemisch oder in lösung mit dem organischen Lösungsmittelsystem vorgelegt wird, wobei als organische Lösungsmittel einzeln oder in einem Gemisch mindestens zweier Verbindungen eingesetzt werden:

Kohlenwasserstoffe, wie z. B. Petrolether, Benzin, Paraffine oder Octan.

Ether, wie z. B. Tetrahydrofuran, Diäthyläther oder Di-n-butyläther.

Ester, wie z. B. Essigsäureethylester oder Wachse.

Chlorierte Kohlenwasserstoffe, wie z. B. Methylenchlorid, Trichloräthan.

Nitrierte Kohlenwasserstoffe, wie z. B. Nitromethan.

Ketone, wie z. B. Aceton.

Siloxane, wie z. B. Siliconöl.

Quarternäre Ammoniumverbindungen, wie z. B. Octadecyldimethylbenzylammoniumchlorid. Carbonsäure wie z.B. Essigsäure, Propionsäure

In einer bevorzugten Form der Erfindung wird die wässrige Phase vorgelegt und das Siliciumtetrachlorid zugegeben.

Die Reaktionstemperatur kann zwischen 0 und 50 °C, vorzugsweise zwischen 10 und 30 °C gehalten werden.

Von besonderem Interesse kann die Reaktionstemperatur von 0 bis 10 °C sein, weil hier bevorzugt kugelförmige Produkte entstehen.

Das erfindungsgemäße Verfahren weist die folgenden Vorteile auf:

Es können definierte hydrophobe Kieselsäuren in einem Schritt hergestellt werden, wenn das organische lösungsmittel ein Siloxan bzw. ein Siliconöl enthält.

Durch die Einstellung der Verfahrensbedingungen ist die Maßschneiderung der BET-Oberflächen und der Teilchenverteilung möglich.

Es lassen sich 20 bis 100 µ große vorzugsweise kompakte Kugeln aus Siliciumdioxid herstellen.

Diese Kugeln können vorteilhafterweise als Katalysatorträger eingesetzt werden. Die hydrophilen Kieselsäuren können nach einer Calcination als Quarzersatzstoff eingesetzt werden. Die hydrophoben Kieselsäuren können als Entschäumerkieselsäuren, Mattierungsmittel oder als Füllstoff in Siliconkautschuk eingesetzt werden.

## Beispiele

Bei den folgenden Versuchen wird ein Dreihals-Kolben verwendet. Es wird mit Wasser gekühlt. Die Reaktionsmischung wird mittels eines KPG-Rührers gerührt. Bei der Reaktion wird in der Regel ein Temperaturbereich von 10 bis 30 °C eingehalten.

Die BET-Oberfläche der erhaltenen Produkte wird nach DIN 66 131 unter Verwendung von Stickstoffgas ermittelt.

Die Teilchengrößenverteilung wird nach der CILAS-Methode und aus Rasterelektronenaufnahmen ermittelt.

Die Reaktion wird in der Regel so durchgeführt, daß man eine Komponente vorlegt und unter Rühren die andere Komponente während eines vorgegebenen Zeitraumes zutropft.

Beispiel 1

Vorlage: 300 ml Siliconöl V 100 Rhone Poulenc
Rhodeosil 47 V 100
1 mol $H_2O$
= 1 h emulgiert (1000 $^u$/min)

Zugabe:                          1/2 mol $SiCl_4$

Zugabezeit:                      50 min

Temperaturverlauf:               14 $\pm$ 2 °C

Nachrührzeit:                    1 h (kühlt bei der
Nachrührzeit auf - 1 °C
ab)

Ausbeute:                        100 %

Produkt:                         "Hydrophobe Kieselsäure"

Oberfläche (BET) nach DIN:   19 $m^2$/g
66 131

mittlere Teilchengrösse (Cilas): 4,2 $\mu$

mittlere Teilchengrösse (REM)  : 2 $\mu$

C-Gehalt:                        7,9 %

Beispiel 2

```
Vorlage: 20 ml Siliconöl V 100 (Rhone Poulenc)
         4,1 mol Essigester
         1/2 mol SiCl₄
       = 600 ᵁ/min


Zugabe:              1 mol Wasser
Zugabezeit:          10 min
Temperaturverlauf:  20 - 25 °C
Nachrühren:          1 h
                   = 600 ᵁ/min


Produkt:                      "Hydrophobe Kieselsäure"

Oberfläche (BET):             221 m²/g

mittlere Teilchengrösse (Cilas): 32 µ (Agglomerate)

C-Gehalt:                     7,61 %
```

Beispiel 3

Vorlage:  2,05 mol Essigester
          200 ml Petrolether,Siedepunkt 140 °C
          1 mol $H_2O$

Zugabe:                              0,5 mol $SiCl_4$

Zugabezeit:                          60 min

Rührgeschwindigkeit:                 600 $^u$/min

Temperaturverlauf:                   46 - 49 °C

Nachrühren:                          1 h bei 45 °C

Ausbeute:                            90 %

Oberfläche (BET):                    47 $m^2$/g

mittlere Teilchengrösse (Cilas):  13 $\mu$

. . .

Beispiel 4

Vorlage: 2,05 mol Essigester
200 ml Petrolether, Siedepunkt 140 °C
1 mol $H_2O$

Zugabe:                              0,5 mol $SiCl_4$

Zugabezeit:                          55 min

Rührgeschwindigkeit:                 600 $^u$/min

Temperaturverlauf:                   16 - 24 °C

Nachrühren:                          1 h

Ausbeute:                            91 %

Oberfläche (BET):                    110 $m^2$/g

mittlere Teilchengrösse (Cilas):     13,6 $\mu$

...

6

Beispiel 5

| | |
|---|---|
| Vorlage: | 4,1 mol Essigester |
| | 1 mol $H_2O$ |
| Zugabe: | 0,5 mol $SiCl_4$ |
| Zugabezeit: | 55 min |
| Rührgeschwindigkeit: | 600 u/min |
| Temperaturverlauf: | 16 - 20 °C |
| Nachrühren: | 1 h |
| Ausbeute: | 95 % |
| Oberfläche (BET): | 780 $m^2/g$ |
| mittlere Teilchengrösse (Cilas): | 30 µ |

. . .

Beispiel 6

| | |
|---|---|
| Vorlage: | 6,2 mol Aceton |
| | 400 ml Petrolether, |
| | 140 °C 1 mol $H_2O$ |
| Zugabe: | 0,5 mol $SiCl_4$ |
| Zugabezeit: | 55 min |
| Rührgeschwindigkeit: | 800 $^u$/min |
| Temperaturverlauf: | 17 - 9 °C |
| Nachrühren: | 1 h |
| Ausbeute: | 100 % |
| Oberfläche (BET): | 524 $m^2$/g |
| mittlere Teilchengrösse (Cilas): | 56,4 $\mu$m |

...

Beispiel 7

Vorlage: SiCl$_4$

Zugabe: 1 mol H$_2$O
0,00024 mol quart. Ammoniumverbindung (Octadecyldimethylbenzylammoniumchlorid)
90 ml Petrolether, 140 °C

Zugabezeit:                                20 min

Rührgeschwindigkeit:                       1000 $^u$/min

Temperaturverlauf:                         30 - 45 °C

Nachrühren:                                1 h bei gleicher
                                           Temperatur

Ausbeute:                                  100 %

Oberfläche (BET):                          90 m$^2$/g

mittlere Teilchengrösse (Cilas):  31 µm

C-Gehalt:                                  3,9 %

Cl-Gehalt:                                 0,3 %

...

Beispiel 8

```
400 ml   Eisessig

200 ml   Benzin

 18 ml   H₂O

 25 ml   Silikonöl Rhodisil 47 V 10

600 U/min/ 5°C

58 ml SiCl₄ in 1 h zugetropft

T_Start: 7°C    T_Ende: 4°C

1 h 15 min. bei 600 U/min gerührt


Oberfläche (BET)        412 m²/g

mittlere Teilchengrösse   17 μm

Methanolbenetzbarkeit     57 %

C-Gehalt                 4,8 %
```

. . .

Beispiel 9

```
400 ml   Eisessig

200 ml   Benzin

 18 ml   H2O

 10 ml   Silkonöl Rhodisil 47 V 10

600 U/min / 35°C

 58 ml SiCl4 in 25 min zugetropft

TStart: 35°C    TEnde: 31°C

 1 h 30 min gerührt bei 35°C 600 U/min.
```

```
Oberfläche                      265m²/g

mittlere Teilchengrösse          14 µm

Methanolbenetzbarkeit            61 %

C-Gehalt                        4,4 %
```

. . .

**Patentansprüche**

1. Verfahren zur Herstellung von kugelförmiger Kieselsäure bestehend aus kompakten Kugeln aus Siliciumdioxid mit einer Teilchengröße von 20 bis 100 um durch Hydrolyse von Siliciumtetrachlorid mittels Wasser in Gegenwart eines organischen Lösungsmittelsystems, **dadurch gekennzeichnet**, daß man entweder das Siliciumtetrachlorid oder das Wassser vorlegt und den jeweils anderen Reaktionspartner zutropft, wobei man entweder das Siliciumtetrachlorid oder das Wasser in reiner Form zutropft, während der jeweils andere Reaktionspartner im Gemisch oder in Lösung mit dem organischen Lösungsmittelsystem vorgelegt wird, wobei als organische Lösungsmittel einzeln oder in einem Gemisch mindestens zweier Verbindungen eingesetzt werden:.

11

Kohlenwasserstoffe, wie zum Beispiel Petrolether, Benzin, Paraffine oder Octan.
Ether, wie zum Beispiel Tetrahydrofuran, Diäthyläther oder Di-n-butyläther.
Ester, wie zum Beispiel Essigsäureethylester oder Wachse.
Chlorierte Kohlenwasserstoffe, wie zum Beispiel Methylenchlorid, Trichloräthan.
Nitrierte Kohlenwasserstoffe, wie zum Beispiel Nitromethan.
Ketone, wie zum Beispiel Aceton.
Siloxane, wie zum Beipsiel Siliconöl.
Quarternäre Ammoniumverbindungen, wie zum Beispiel Octadecyldimethylbenzylammoniumchlorid.
Carbonsäure-wie zum Beispiel Essigsäure; Propionsäure

## Claims

1. A process for the production of spherical silica consisting of compact spheres of silicon dioxide having a particle size of 20 to 100 μm by hydrolysis of silicon tetrachloride with water in the presence of an organic solvent system, characterized in that either the silicon tetrachloride or the water is introduced first and the other reactant is added dropwise thereto, either the silicon tetrachloride or the water being added dropwise in pure form and the other reactant being introduced in admixture or in solution with the organic solvent system, at least two compounds being used individually or in admixture as organic solvents:

hydrocarbons, such as for example petroleum ether, gasoline, paraffins or octane;
ethers, such as for example tetrahydrofuran, diethyl ether or di-n-butyl ether;
esters, such as for example ethyl acetate or waxes;
chlorinated hydrocarbons, such as for example methylene chloride, trichloroethane;
nitrated hydrocarbons, such as nitromethane for example;
ketones, such as acetone for example;
siloxanes, such as silicon oil for example;
quaternary ammonium compounds, such as octadecyl dimethyl benzyl ammonium chloride for example;
carboxylic acids, such as for example acetic acid, propionic acid.

## Revendications

1. Procédé de préparation de silice sous forme de sphères, se composant de billes compactes de dioxyde de silicium ayant une grandeur de particules de 20 à 100 x 10⁻⁶ m , obtenu par hydrolyse de tétrachlorure de silicium par l'eau en présence d'un système de solvants organiques, procédé caractérisé en ce que, on met en place d'abord ou bien le tétrachlorure de silicium ou bien l'eau et on ajoute goutte à goutte l'autre partenaire de la réaction, en ajoutant goutte à goutte ou bien le tétrachlorure de silicium ou bien l'eau sous forme pure, alors que l'autre partenaire respectif de la réaction est mis en place en mélange ou en solution avec le système de solvants organiques, en utilisant comme solvants organiques seuls ou en mélange au moins deux composés :

- des hydrocarbures, comme par exemple l'éther de pétrole, le benzène, la paraffine ou l'octane,
- des éthers, comme par exemple du tétrahydrofurane, du diéthyléther ou du di-n-butyléther,
- des esthers, comme par exemple l'acétate d'éthyle ou des cires,
- des hydrocarbures chlorés, comme par exemple le chlorure de méthylène, le trichloréthane,
- des hydrocarbures nitrés, comme par exemple le nitrométhane,
- des cétones, comme par exemple l'acétone,
- des siloxanes, comme par exemple de l'huile de silicone,
- des composés d'ammonium quaternaires, comme par exemple l'octadécyldiméthylbenzyle-chlorure d'ammonium,
- des acides carboxyliques comme par exemple l'acide acétique, l'acide propionique.